# EUROPEAN PATENT SPECIFICATION

(11) **EP 2 597 826 B1**
(45) Date of publication and mention of the grant of the patent: **29.07.2015**
(21) Application number: 12194113.2
(22) Date of filing: 23.11.2012
(51) Int. Cl.: H04L 12/58

(54) **Delivery of a communication event**
Bereitstellung eines Kommunikationsereignisses
Livraison d'un événement de communication

(30) Priority: 23.11.2011 GB 201120215; 15.12.2011 US 201113327356
(43) Date of publication of application: 29.05.2013
(73) Proprietor: Skype, Dublin 2 (IE)
(72) Inventor: Lindblom, Jonas, 16937 Solna (SE)
(74) Representative: Driver, Virginia Rozanne

(56) References cited:
- US-A1- 2006 224 681
- US-A1- 2009 150 501

## Description

### Field of the Invention

The present invention relates to the delivery of a communication event at a user terminal.

### Background

Some communication systems allow the user of a device, such as a personal computer, to conduct voice or video calls over a packet-based computer network such as the Internet. Such communication systems include voice or video over internet protocol (VoIP) systems. These systems are beneficial to the user as they are often of significantly lower cost than conventional fixed line or mobile cellular networks. This may particularly be the case for long-distance communication. To use a VoIP system, the user installs and executes client software on their device. The client software sets up the VoIP connections as well as providing other functions such as registration and authentication. In addition to voice communication, the client may also set up connections for other communication media such as instant messaging ("IM"), SMS messaging, file transfer and voicemail.

With increasing mobile bandwidths, there is increasing interest in providing packet-based voice and video calls via client applications running on mobile devices such as Internet-enabled mobile phones. These mobile devices comprise transceivers such as short-range RF transceivers operating on one or more unlicensed bands for accessing the Internet via wireless access points (e.g. of Wi-Fi access points of WLAN networks), and/or cellular transceivers operating on one or more licensed bands for accessing the Internet via a packet-based service of a cellular network such as GPRS (General Packet Radio Service) or HSPA (High Speed Packet Access).

A client application needs to maintain a network connection to its associated client service provider so that it can receive incoming communications and other data. However, there is a problem in that even if the mobile phone has sufficient processing and bandwidth resources to support packet-based video calling, using these resources for too long will be wasteful of battery life and/or may be expensive if the connection is charged per unit data. Packet-based communications are therefore still restricted by the available resources when accessed through a mobile device. Furthermore, from a network operator's perspective it may still be desirable to try to avoid excessive network traffic.

To date, some attempts to overcome the problem with respect to the power consumption of the mobile device have been made.

Apple Inc.'s "iOS Application Programming Guide:Executing Code in the Background" which can be found at:
http://developer.apple.com/library/ios/#documentation/iphone/conceptual/iphoneospr ogrammingguide/BackgroundExecution/BackgroundExecution.html, discloses a method of implementing a VoIP application on a device. The VoIP application maintains a persistent network connection i.e. a TCP (transport control protocol) connection to a server so that it can receive incoming calls and other relevant data. Rather than keep the VoIP application "awake" all the time, the system allows the VoIP application to be suspended and the system monitors the network sockets that the device uses for VoIP services. When incoming VoIP communications are detected, the system activates the VoIP application and returns control of its network sockets to the VoIP application.

"Push notification" mechanisms have been developed such as Apple Inc.'s "Apple Push notification Service" and the "Android Cloud to Device Messaging" (C2DM) framework for mobile devices, enable a third-party application server to send a push notification to a mobile device. The mobile device must maintain a persistent TCP/IP connection to the third-party application server in order to receive the push notification. An example of a push notification is a notification that an update is available for an application installed on the mobile device that is not currently running on the device. This enables the user of the mobile device to be notified of the update without having the application running on the device, therefore battery life of the mobile device is conserved.

Various client applications have been developed that are based on a push notification mechanism. These include for example Fring ®, WhatsApp, Tango, and Viber.

These known client applications enable a user to maintain an "online" status even when the user logs out of the application. Therefore whenever a contact calls or sends an IM message to the user using the client application, the user is alerted by way of an audio and/or visual notification and the user is able to manually log-in to the client application in order to receive the communication event.

US 2006/224681 describes a system in which an email addressed to an email address is received. From the email message, characteristics of the email are identified and thereafter a transmission of a notification message to a mobile device is initiated. The notification message comprises an application identifier operable to activate an associated application installed on the mobile device.

### Summary of Invention

The inventor has realised that the known client applications based on a push notification mechanism have a number of disadvantages.

Firstly, the known client applications alert the user to every communication event that is received at the mobile device; it will be appreciated that this may be distracting and/or frustrating for the user.

Secondly, transmitting every communication event to the mobile device is wasteful of the mobile device's battery life. Furthermore, transmitting every communication event to the mobile device also results in increased network traffic, this is undesirable for both the network operator and the user if the user is charged per unit data.

There is therefore a need for a technique to address the aforementioned problems of delivering communication events to a user terminal.

In one aspect of the invention there is provided a method of delivering selected communication events to a user terminal over a communications network, the method comprising: executing a communication client application in a suspended state at the user terminal; receiving a communication event at a filtering component; using filtering parameters at the filtering component, to determine whether the communication event is a selected communication event; blocking the communication event at the filtering component if the communication event is not a selected communication event; if the communication event is a selected communication event, alerting a user of the user terminal to the communication event; and executing event notification code in an active state at the user terminal when the communication client application is in a suspended state to detect the receipt of said alert and display a notification to a user of the user terminal to notify said user of the communication event, wherein said notification requests confirmation from said user to activate the communication client; and activating the communication client application to receive the communication event at the user terminal in response to receiving a user input indicating said confirmation.

Preferably, the filtering parameters are provided to the filtering component by: configuring them at the user terminal and uploading them to the filtering component; configuring them at the filtering component; or executing an algorithm at the filtering component to compute them. The algorithm may compute current filtering parameters based on user behaviour with respect to previously received communication events.

Preferably, the step of using filtering parameters is selectively activated in dependence on at least one of: detecting that the user terminal is a mobile device; detecting that a battery save mode of the user terminal is enabled; detecting location of the user terminal; detecting the type of user terminal; and detecting the time of day.

Preferably, the filtering parameters include one or more of: the communication event being sent by one or more particular users; the communication event being a particulartype of communication event; the communication event being sent at a particular time of day; the communication event having a particular associated context; communication event containing one or more keywords;

Preferably, the communication event type is selected from: a voice call; a video call; a multi-user voice or video call; an instant message; a multi-user instant message; a file transfer; a presence notification.

A voice or video call may be a selected communication event, regardless of the other filtering parameters which could determine that the communication event should be blocked.

In one embodiment of the invention, the filtering component is implemented at a server in the communications network, the communication event is received at the user terminal over a channel established between the server and the user terminal. In this embodiment the step of alerting may comprise transmitting the communication event from the server to the user terminal over the communication network.

In another embodiment of the invention, the filtering component is implemented at a second user terminal executing an instance of a communication client application associated with a user of the user terminal, the step of alerting comprises: transmitting the communication event from the second user terminal to a server in the communications network; storing the communication event at the server; and transmitting a push notification from the server to the user terminal over the communication network.

In another embodiment of the invention, the filtering component is implemented at the user terminal.
A VoIP socket may be monitored at the user terminal to detect the receipt of the communication event.

Preferably, when the communication client application is in a suspended state a graphical user interface associated with the communication client application is not displayed on the user terminal, and responsive to activating the communication client application, the method comprising displaying the graphical user interface associated with the communication client application.

In a second aspect of the invention there is provided a user terminal arranged to deliver only selected communication events to a user of the user terminal, the user terminal comprising: input means for receiving communication events; processing means for executing a communication client application which has a suspended state and an activated state, said processing means arranged to execute filtering code which uses filtering parameters to determine whether a received communication event is a selected communication event and block the communication event if the communication event is not a selected communication event; and display means arranged to alert a user of the user terminal to a communication event if the communication event is a selected communication event, wherein the processing means is arranged to execute event notification code in an active state at the user terminal when the communication client application is in a suspended state to detect the receipt of said alert and display a notification to a user of the user terminal to notify said user of the communication event, wherein said notification requests confirmation from said user to activate the communication client and wherein the communication client application adopts the activated state to receive a selected communication event in response to receiving a user input indicating said confirmation.

### Brief Description of the Drawings

For a better understanding of the present invention and to show how it may be put into effect, reference is now made by way of example to the accompanying drawings in which:
Figure 1 is a schematic representation of a communication system according to an embodiment of the invention,
Figure 2 is a schematic representation of a user terminal,
Figure 3 is a method of delivering a communication event according to an embodiment of the invention,
Figure 4 illustrates the format of a push notification,
Figure 5 is a schematic representation of a communication system according to an embodiment of the invention,
Figure 6 is a method of delivering a communication event according to another embodiment of the invention,

### Detailed Description of Preferred Embodiments

In mobile clients, there is a need to control the amount of traffic/messages sent to the mobile in order to save battery. The embodiments of the invention relate to a mechanism for "event filtering" such that only *user relevant* information, i.e. information that the user is interested in at that point in time/space/context, for example ringing events, chat messages *of interest* etc. is broadcasted to the mobile client.

The event filtering may be implemented in the cloud (on a server) such that only relevant information is broadcasted to the mobile client, this is particularly advantageous where conserving battery life of a mobile device is of particular concern.

Alternatively, the event filtering can be implemented at a user terminal which may reduce the infrastructure cost. This scenario may be particularly advantageous where battery life of a user terminal is not the highest concern.

A known VoIP communication client is Skype.

Current mobile Skype clients are designed to run all the time in the background on the mobile, draining lots of battery. One application of the event filtering mechanism is described below with reference to embodiments of the invention in which the clients rely on a "Push Notification" or monitor a VoIP socket to wake the Skype client up when there is an incoming message or call.

Simply pushing all events currently processed by a Skype client is not desirable: a power user would be spammed with non-relevant chat messages for example.

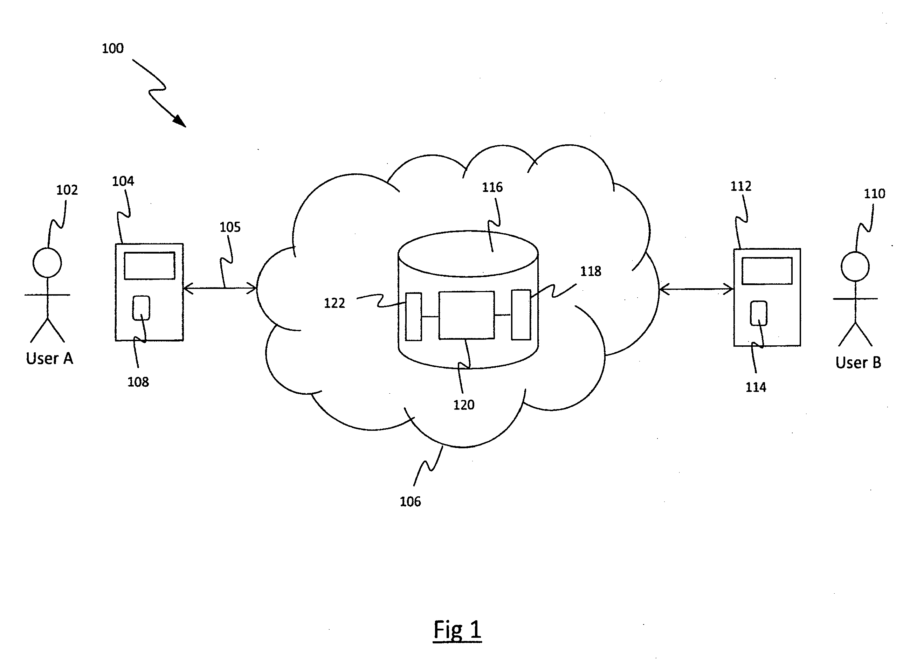

Figure 1 shows a communication system 100 comprising a first user ("User A") 102 who has an associated first user device 104 and a second user ("User B") 110 who has an associated second user device 112. The user devices 104 and 112 can communicate over the network 106 in the communication system, thereby allowing the users 102 and 110 to communicate with each other over the network 106. In the preferred embodiment the communication system is a packet-based, VoIP communication system, but other types of communication system could also be used, such as Peer-to-Peer (P2P), non-P2P or IM systems. The network 106 may, for example, be the Internet, but in alternative embodiments the network 106 could be any other suitable network which allows data to be transmitted between end points, such as an intranet.

The user device 104 may be a user terminal in the form of, for example, a mobile phone, a personal digital assistant ("PDA"), a personal computer ("PC") (including, for example, Windows, Mac OS™ and Linux™ PCs), a tablet computer, a television and remote control, a gaming device or other embedded device able to connect to the network 106. The user device 104 is arranged to receive information from and output information to the user 102 of the user device 104. In a preferred embodiment of the invention the user device 104 comprises a display such as a screen and an input device such as a keyboard, mouse, touch-screen, keypad and/or joystick. The user device 104 is connected to the network 106. The network 106 comprises a server 116 which can be used to facilitate communication over the network 106. Other servers may also be included in the network 106 but only one server (server 116) is shown in Figure 1 for clarity. Server 116 comprises an input port 118, a central processing unit 120, and a transmitter 122. Data may be split into data packets for transmission over the network 106.

Note that in alternative embodiments, the user device 104 can connect to the network 106 via additional intermediate networks not shown in Figure 1. For example, if the user device 104 is a mobile device, then it can connect to the network 106 via a cellular mobile network, not shown in Figure 1.

The user device 104 executes a communication client 108, provided by a software provider associated with the communication system 100. The communication client 108 is a software program executed on a local processor in the user device 104. The client 108 performs the processing required at the user device 104 in order for the user device 104 to transmit and receive data over the communication system 100. As is known in the art, the client 108 may be authenticated to communicate over the communication system 100 through the presentation of digital certificates (e.g. to prove that User A 102 is a genuine subscriber of the communication system 100 - described in more detail in WO 2005/009019).

The user device 112 corresponds to the user device 104. The user device 112 executes, on a local processor, a communication client 114 which corresponds to the communication client 108. The client 114 performs the processing required to allow the user 110 to communicate over the network 106 in the same way that the client 108 performs the processing required to allow the user 102 to communicate over the network 106. Figure 1 shows only two users (102 and 110) for clarity, but many more users may be connected to the communication system 100, and may communicate over the communication system 100 using respective communication clients executed on respective user devices, as is known in the art.

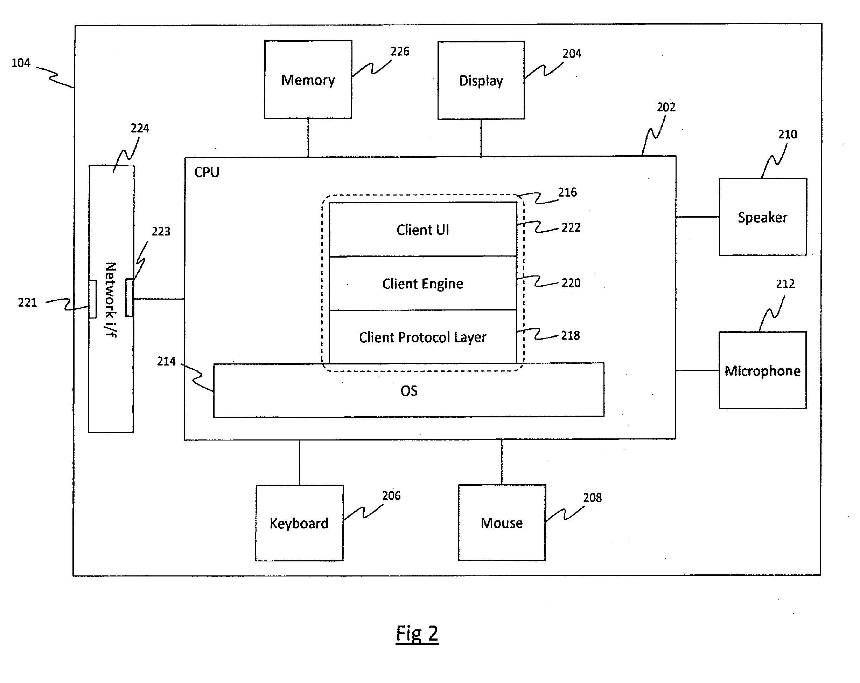

Figure 2 illustrates a detailed view of the user device 104 on which is executed client 108. The user device 104 comprises a central processing unit ("CPU") 202, to which is connected a display 204 such as a screen, input devices such as a keyboard (or a keypad) 206 and a pointing device such as a mouse (or joystick) 208. The display 204 may comprise a touch screen for inputting data to the CPU 202. An output audio device 210 (e.g. a speaker) and an input audio device 212 (e.g. a microphone) are connected to the CPU 202. The display 204, keyboard 206, mouse 208, output audio device 210 and input audio device 212 are integrated into the user device 104. In alternative user devices one or more of the display 204, the keyboard 206, the mouse 208, the output audio device 210 and the input audio device 212 may not be integrated into the user device 104 and may be connected to the CPU 202 via respective interfaces. One example of such an interface is a USB interface. The CPU 202 is connected to a network interface 224 such as a modem for communication with the network 106. The network interface 224 may be integrated into the user device 104 as shown in Figure 2. In alternative user devices the network interface 224 is not integrated into the user device 104. The user device 104 also comprises a memory 226 for storing data as is known in the art.

The network interface 224 can be wired or wireless. It provides at least one port 221 for receiving and transmitting communication events to and from the network 106, and at least one "socket" 223 for communicating with the CPU 202. The socket is an artefact defined within the CPU 202 for data transmission in a manner known per se.

Figure 2 also illustrates an operating system ("OS") 214 executed on the CPU 202. Running on top of the OS 214 is a software stack 216 for the client 108. The software stack shows a client protocol layer 218, a client engine layer 220 and a client user interface layer ("UI") 222. Each layer is responsible for specific functions. Because each layer usually communicates with two other layers, they are regarded as being arranged in a stack as shown in Figure 2. The operating system 214 manages the hardware resources of the device 104 and handles data being transmitted to and from the network 106 via the network interface 224. The client protocol layer 218 of the client software communicates with the operating system 214 and manages the connections over the communication system 100. Processes requiring higher level processing are passed to the client engine layer 220. The client engine 220 also communicates with the client user interface layer 222. The client engine 220 may be arranged to control the client user interface layer 222 to present information to the user 102 via the user interface of the client 108 and to receive information from the user 102 via the user interface.

The user device 112 is implemented in the same way as user device 104 as described above, wherein the user device 112 may have corresponding elements to those described herein in relation to user device 104.

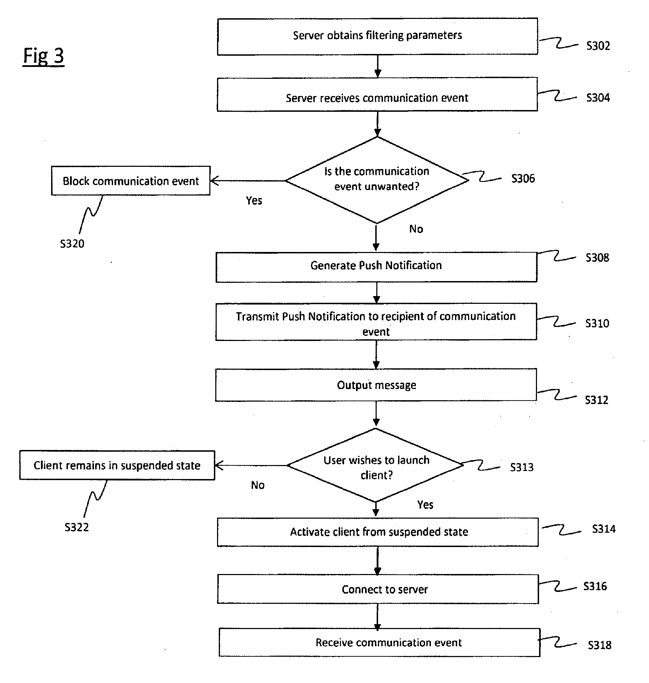

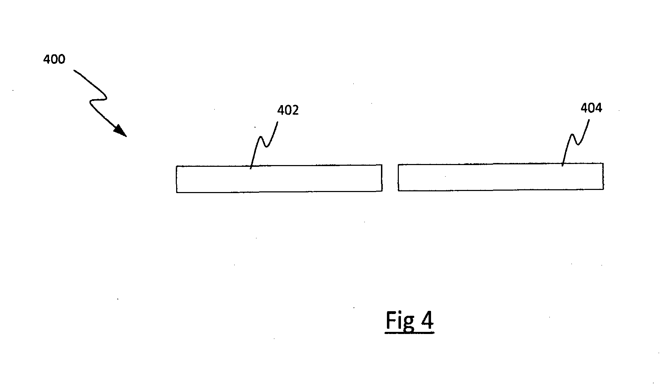

With reference to Figures 3 and 4 there are described below methods of delivering a communication event sent from user device 112 to user device 104 according to one embodiment. In the methods, the communication client 108 has been installed on the user device 104, however the communication client 108 is in a "suspended state" such that the client 108 reduces its drain on the power source (not shown in Figure 2) of the device 104, and use of CPU resource. When the client 108 is in a suspended state the user 102 appears in a contact list associated with user 110 as being able to receive communication events. As mere examples the user 102 may be shown as "online" or "available on mobile" in the contact list associated with user 110.

In a suspended state, no user interface associated with the communication client 108 is presented on the display 204 and the client 108 is not activated to process communication events.

Figure 3 is a flow chart for implementing a method of an embodiment of the invention.

In step S302 the server 116 obtains filtering parameters for defining selected communication events. In some embodiments of the invention, the filtering parameters may be entered into the communication client 108 by user 102 i.e. explicitly expressed by the user using the user interface presented by client user interface layer 222, and uploaded to the server 116 via connection 105 at a time when the client 108 was previously executed at the user device 104, and had established the connection 105. The user may also configure the filtering parameters in settings of the user device 104, and the settings uploaded to the server 116.

In other embodiments of the invention the user 102 does not need to configure the filtering parameters. In one example default filtering parameters may be preconfigured in the settings of the user device 104, and these default parameters can be uploaded to the server 116. In another example the server 116 may execute an algorithm to compute the filter parameters automatically. The algorithm may compute the filter parameters automatically by adaptively learning how user 102 treats incoming communication events. For example this may be by way of determining that user 102 never reads instant messages from a particular user or users, or by determining that user 102 never accepts a particular type of communication event, or by determining that the user 102's behaviour differs at different times of the day. Thus the algorithm may compute the filter parameters progressively as it learns from the user 102's behaviour.

Irrespective of how the server obtains the filtering parameters, the filtering parameters are used by the server 116 to filter communication events that are received at the server 116.

The filtering parameters may define that the user should only be notified of a communication event when it is sent by a particular user, when it is sent at a particular time of day, when it is of a particular type of communication event, when the communication event contains certain keywords, or when the communication event has a particular associated context i.e. when the communication event is sent from a work colleague.

In step S304, the server 116 receives at port 118 a communication event sent from user device 112. The communication event may be one of a voice call, a video call, a multi-user voice or video call, an IM chat, a multi-user IM chat (e.g. for software development), a file transfer, a presence notification or another packet based communication.

In step S306, the server 116 determines whether the received communication is "unwanted" based on the filtering parameters. Events that are not unwanted are wanted or selected.

If the server determines that the received communication event is not "unwanted" based on the filtering parameters i.e. the received communication event is a "wanted" communication event, then the server 116 generates a push notification in step S308. The format of a Push notification 400 is shown in Figure 4. As illustrated in Figure 4 the Push notification 400 comprises at least a token 402 and a payload 404.

It will be appreciated that push notification 400 may include additional information to that shown in Figure 4. For example, the format of a known push notification can be found at:
http://developer.apple.com/library/ios/#documentation/Networkingl nternet/Conceptua I/RemoteNotificationsPG/CommunicatingWlthAPS/CommunicatingWlthAPS.html.

At step S310 the push notification is transmitted from the server 116 to the recipient device 104. Upon receipt of the push notification at the user device 102 via the port 221 at network interface 224, the operating system 214 is configured to generate and output a message (S312) that is displayed on display 204 informing user 102 of the communication event and asking the user 102 (step S313) if they want to activate the client from its suspended state such that the communication event can be received. It is important to note that the message output at step S312 is not displayed to the user 102 on display 204 via a graphical user interface associated with the client 108, as the communication client 108 is in a "suspended state". The client 108 can configure the message output at step S312 i.e. labels on selection buttons and a sound notification to play when the client 108 is active. As a mere example to illustrate the concept, the short message displayed to the user 102 may comprise a message alerting the user 102 to the communication event i.e. "Skype IM message received, Launch Skype?".

The user 102 may respond to this message by making an appropriate selection for example using input means 206, 208, 212 or touching the display 204. If the user 102's selection indicates that the client 108 should not be activated or if no selection is received from user 102, the client 108 remains in a suspended state (S322).

If the user 102's selection indicates that the client 108 should be activated, the process proceeds to step S314. At step S314 the CPU 202 is configured to process the data contained in the push notification. Upon processing the push notification, the CPU 202 is configured to activate the communication client 108 from its suspended state. That is, upon reading the data contained in token 402, the client engine 220 is arranged to control the client user interface layer 222 to display the graphical user interface associated with the client 108 on display 204.

The payload 404 contains a short message (typically less than 256 bytes) which is intended to provide information relating to the communication event that is stored on server 116. Upon processing the payload 404, the CPU 202 sends the message contained therein to the display 204 such that the short message may be displayed to the user 102 via the graphical user interface associated with the client 108,

In the case that the communication event is a short IM message, the message that is displayed to the user 102 may be the actual IM message, however it will be appreciated that due to the size restrictions of payload 404, the message displayed to user is not typically the actual IM message.

Furthermore, upon reading the data contained in token 402, the client protocol layer 218 communicates with the operating system 214 and establishes a channel (S316) over the network 106 to the server 116. This channel is different to the TCP/IP connection used to receive the push notification. It will be appreciated that the channel may be established such that user device 104 is connected directly to server 116 or indirectly through one or more intermediary servers or network nodes.

Once a channel over the network 106 is established between the user device 104 and the server 116, the wanted communication event may be transmitted from transmitter 122 to the activated communication client 108 (S318) in response to which the client 108 alerts the user to the communication event through the graphical user interface associated with the client 108 on display 204.

Whilst it has been described above that upon receipt of the push notification (S310) the user 102 is asked if the client 108 should be launched, in an alternative implementation the steps S312 and S313 may be omitted and thus the client 108 is activated from its suspended state upon receipt of the push notification.

Referring back to step S306, if the server 116 determines that the received communication event is "unwanted" based on the filtering parameters, a push notification is not generated and the method proceeds to step S320. At step S320 the server 116 may store either the communication event itself or information relating to the communication event, for delivery to the communication client 108 when the communication client 108 is subsequently executed by the user 102. For example, in the case of an IM message that is blocked at step S306, the IM message itself is stored at the server 116. That is, certain events such as an IM chat, would still exist in the cloud (on server) and sync with active clients when active. In the case of a voice/video call, a notification may be delivered to the user 102 informing him that he missed the voice/video call. In another implementation, the unwanted communication event is simply discarded and the communication event itself or information relating to the communication event is not stored at the server 116.

The filter does not have to operate all the time. The filter may operate in dependence on detecting via the network interface 224 that user device 104 is a mobile device, and/or detecting that the user device 104 has a battery saving mode setting enabled and/or detecting certain environmental conditions such as the location of the user device 104 or the time of day.

In one embodiment of the invention, characteristics of the user terminal are determined such as the type of user terminal (i.e. whether the user terminal is a mobile device); and whether a battery save mode of the user terminal is enabled, and the filtering parameters are selected in dependence on these characteristics.

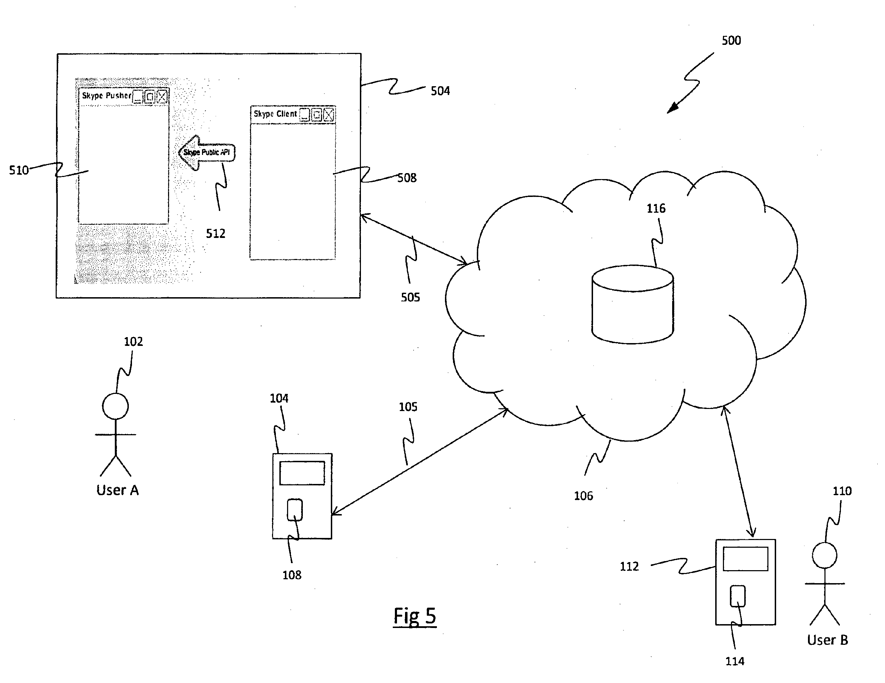

Figure 5 illustrates a communication system 500 in which user 102 is associated with both a user device 504 and user device 104. The user device 504 may be a user terminal in the form of, for example, a mobile phone, a personal digital assistant ("PDA"), a personal computer ("PC") (including, for example, Windows™, Mac OS™ and Linux™ PCs), a tablet computer, a television and remote control, a gaming device or other embedded device able to connect to the network 106.

The user device 504 has similar functional blocks to the user device 104 shown in Figure 2, but would typically be a personal computer as opposed to a mobile device.

The user device 504 executes, on a local processor, an instance of communication client 508 which corresponds to the communication client 108. Communication client instance 508 and communication client 108 are both associated with user 102. That is, user 102 of the user device 104 has a log-in which identifies him uniquely to client 108 as well as the client 508, such that filtering parameters configured at client 508 are effective for filtering at device 104. The client 508 performs the processing required to allow the user 102 to communicate over the network 106 in the same way that the client 108 performs the processing required to allow the user 102 to communicate over the network 106. It is important to note that communication client 108 is in a "suspended state" as described above, however communication client 508 is "active" such that packet-based communications may be sent to, and received from, other users of the communication system 500. User device 504 is typically a user terminal which is able to execute communication client 508 in an active "state" without power resource of the device being of particular concern to the user 102.

A method of delivering a communication event sent from a user device 112 to user device 104 over the communication system 500 will now be described with reference to Figure 5.

In this embodiment of the invention, the filtering of communication events is not implemented at the server 116. Instead filtering parameters (as described hereinabove) are entered into communication client 508 by user 102 using a graphical user interface presented by client 508. These filtering parameters are then communicated to an application 510 executed on the local processor of device 504, via an application programming interface (API) 512. APIs are well known in the art and will not be discussed in detail herein.

When a communication event is received at user device 504 over the network 106 from user device 112, the application 510 scans the communication event. The application 510 scans all incoming communication events (chat messages, calls or other interesting events) and filters them using the filtering parameters. That is the application 510 determines whether the received communication event is a selected communication event.

If the received communication event is a selected communication event, the communication event is sent to server 116 over an encrypted connection 505. The server then operates in accordance with steps S308-S322 as described above to provide user 102 with an option to activate communication client 108 on user device 104 using the push notification.

If the received communication event is determined to be unwanted based on the filtering parameters, the communication event is not sent to server 116 and the user is alerted to the communication event through a graphical user interface associated with the communication client 508, when the communication client 108 is subsequently executed by the user 102.
In order to send a push notification message to user devices running certain operating systems, the push notification must be sent to the device via a server associated with the operating system provider. The invention can be used with such devices, the server 116 simply sends the generated push notification to the server associated with the operating system provider via a persistent and encrypted connection, and this further server then transmits the push notification to the user device.

Alternative to a push notification, a different a framework could be used to achieve the same thing. The basic ideas are similar, but the mobile application in this case keeps one dedicated TCP connection open all the time to the server. A VoIP socket framework such as Apple's VoIP framework however facilitates that the mobile application can be suspended (not consume energy), monitors the connection, and wakes the application up on incoming messages such that they can be processed. Event filtering comes in handy also in such a scenario since one wants to minimize the traffic on the connection, and only receive notifications for relevant events (as defined above).

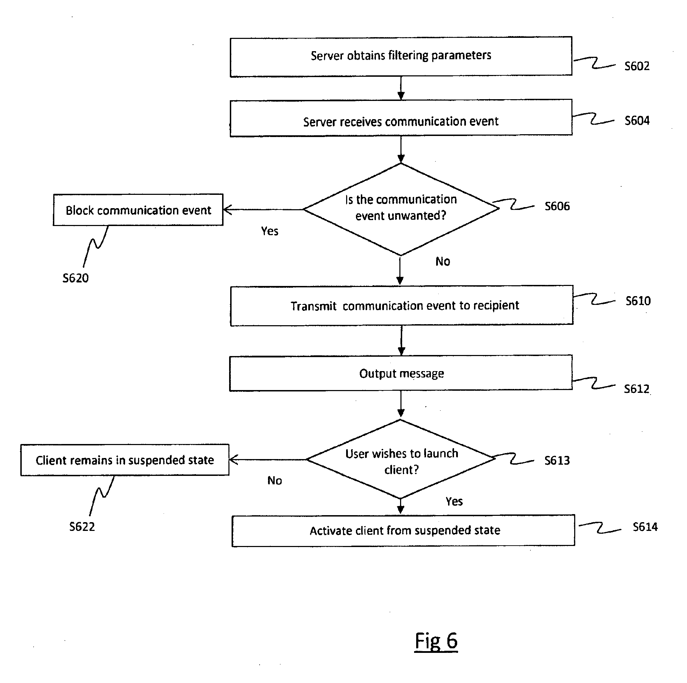

A method of delivering a communication event sent from user device 112 to user device 104 using a VoIP socket framework will now be described with reference to Figure 6. In this embodiment there is no requirement to send push notifications to the device 104.

The steps S602, S604, S606 and S620 correspond to steps S302, S304, S306 and S320 described hereinabove.

If at step S606 the server 116 determines that the received communication event is not "unwanted" based on the filtering parameters i.e. the received communication event is a "wanted" communication event, then the server 116 transmits the communication event to user device 104.

The CPU 202 monitors socket 223 for incoming communication events and executes event handlers, which can be stored in memory 226, to react to traffic on the socket 223.
When an incoming communication event is detected on socket 223 the operating system 204 is configured to generate and output a message (S612) that is displayed on display 204 informing user 102 of the communication event and asking the user 102 (step S613) if they want to activate the client from its suspended state such that the communication event can be output to the user.

Again, it is important to note that the message output at step S612 is not displayed to the user 102 on display 204 via a graphical user interface associated with the client 108, as the communication client 108 is in a "suspended state".

The user 102 may respond to this message by making an appropriate selection for example using input means 206, 208, 212 or touching the display 204. If the user 102's selection indicates that the client 108 should not be activated or if no selection is received from user 102, the client 108 remains in a suspended state (S622).

If the user 102's selection indicates that the client 108 should be activated, the process proceeds to step S614. At step S614 the CPU 202 is configured to activate the communication client 108 from its suspended state such that the communication event can be output to the user 102.

Embodiments of the present invention enable communication client 108 to be placed in a suspended state, thus conserving battery life of the user device 102. This is particularly advantageous when the user device 104 is a mobile device. Furthermore the filtering of communication events implemented at the server 116 ensures that the communication client 108 is only activated when relevant communication events to the user 102 are received at the server 116. Thus the user 102 is not distracted and does not become frustrated by communication events that are not of interest to him.

By filtering the communication events received at the server 116, network traffic through the communication system 100 is reduced. This is desirable from the network operator's perspective, but also the user 102's perspective if user's connection is charged per unit data.

While this invention has been particularly shown and described with reference to preferred embodiments, it will be understood to those skilled in the art that various changes in form and detail may be made without departing from the scope of the invention as defined by the appendant claims.

Whilst the described embodiments implement the event filtering at the server 116, in an alternative embodiment the event filtering can be implemented at the user terminal 104. That is, all communication events are received at the user terminal 104, and the filtering of the communication events is implemented at the user terminal. In this alternative embodiment if it is determined that a received communication event is not "unwanted" based on the filtering parameters i.e. the received communication event is a "wanted" communication event, then steps S612, S613,S614 (if applicable) and S622 (if applicable) are implemented.

By filtering the communication events at the user terminal 104, the processing burden on the server 116 can be substantially reduced.

Whilst embodiments of the invention have been described with reference to a communication event conducted between only two user devices 104,112. It will be appreciated that a communication event received at server 116 may be associated with a plurality of users (not shown in Figure 1) for example a conference voice/video call or a multi-user IM chat message.

The event filtering mechanism is not limited to embodiments of the invention in which the communication client is woken up when there is an incoming message or call. In an alternative embodiment of the invention, the communication client remains in an active state at the user terminal and the event filtering parameters (described above) are selected in dependence on characteristics of the user terminal that is the intended recipient of a communication event.

The characteristics of the user terminal may include one or more of: the type of user terminal, whether a battery saving mode of the user terminal is enabled, the type of network the user terminal is connected to (for example Wi-Fi/3G/LAN), and whether the user terminal is roaming.
In this alternative embodiment, the event filtering may be implemented in the cloud (on a server) or implemented at the user terminal. When the event filtering is implemented on a server, the characteristics of the user terminal are determined at the user terminal and are uploaded from the user terminal to the server.

In the case of the battery saving mode characteristic, this does not have to be continually checked and reported to the server. The user terminal simply has to report when it comes out of battery saving mode (and it is assumed that the user terminal is in the battery saving mode until then).

## Claims

1. A method of delivering selected communication events to a user terminal over a communications network, the method comprising:
executing a communication client application in a suspended state at the user terminal;
receiving a communication event at a filtering component (S304, S604);
using filtering parameters at the filtering component, to determine whether the communication event is a selected communication event (S306, S606);
blocking the communication event at the filtering component if the communication event is not a selected communication event (S320, S620);
if the communication event is a selected communication event, alerting a user of the user terminal to the communication event (S310, S610); and **characterised in that** the method comprises:
executing event notification code in an active state at the user terminal when the communication client application is in a suspended state to detect the receipt of said alert and display a notification to a user of the user terminal (S312, S612) to notify said user of the communication event, wherein said notification requests confirmation from said user to activate the communication client (S313, S613); and
activating the communication client application to receive the communication event at the user terminal (S314, S614) in response to receiving a user input indicating said confirmation.

2. The method of claim 1, wherein the filtering parameters are provided to the filtering component by:
configuring them at the user terminal and uploading them to the filtering component;
configuring them at the filtering component; or
executing an algorithm at the filtering component to compute them, wherein the algorithm computes current filtering parameters based on user behaviour with respect to previously received communication events.

3. The method of any preceding claim, wherein the step of using filtering parameters (S306, S606) is selectively activated in dependence on at least one of:
detecting that the user terminal is a mobile device;
detecting that a battery save mode of the user terminal is enabled;
detecting location of the user terminal;
detecting the type of user terminal; and
detecting the time of day.

4. The method of any preceding claim, wherein the filtering parameters include one or more of:
the communication event being sent by one or more particular users;
the communication event being a particular type of communication event;
the communication event being sent at a particular time of day;
the communication event having a particular associated context;
communication event containing one or more keywords;

5. The method of claim 4, wherein the communication event type is selected from:
a voice call;
a video call;
a multi-user voice or video call;
an instant message;
a multi-user instant message;
a file transfer;
a presence notification.

6. The method of claim 5, wherein a voice or video call is a selected communication event, regardless of the other filtering parameters which could determine that the communication event should be blocked.

7. The method of any preceding claim, wherein the filtering component is implemented at one of the following: (i) at a server in the communications network, the communication event is received at the user terminal over a channel established between the server and the user terminal, wherein the step of alerting (S610) comprises transmitting the communication event from the server to the user terminal over the communication network, (ii) at a second user terminal executing an instance of a communication client application associated with a user of the user terminal, the step of alerting comprises:
transmitting the communication event from the second user terminal to a server in the communications network;
storing the communication event at the server; and
transmitting a push notification (S310) from the server to the user terminal over the communication network; or (iii) at the user terminal.

8. The method of any preceding claim, wherein when the communication client application is in a suspended state a graphical user interface associated with the communication client application is not displayed on the user terminal, and responsive to activating the communication client application, the method comprising displaying the graphical user interface associated with the communication client application.

9. A user terminal arranged to deliver only selected communication events to a user of the user terminal, the user terminal comprising:
input means (224, 221) for receiving communication events;
processing means (202) for executing a communication client application (108) which has a suspended state and an activated state, said processing means arranged to execute filtering code which uses filtering parameters to determine whether a received communication event is a selected communication event and block the communication event if the communication event is not a selected communication event; and
display means (204) arranged to alert a user of the user terminal to a communication event if the communication event is a selected communication event, **characterised in that**:
the processing means is arranged to execute event notification code in an active state at the user terminal when the communication client application is in a suspended state to detect the receipt of said alert and display a notification to a user of the user terminal (S312, S612) to notify said user of the communication event, wherein said notification requests confirmation from said user to activate the communication client (S313, S613) and
wherein the communication client application adopts the activated state to receive a selected communication event in response to receiving a user input indicating said confirmation.

10. A method as claimed in claim 7 wherein the filtering component is implemented at one of the following: (i) the server in the communication network, or (iii) at the user terminal, further comprising monitoring a VoIP socket at the user terminal to detect the receipt of the communication event.

## Patentansprüche

1. Verfahren zur Bereitstellung selektierter Kommunikationsereignisse an eine Benutzerstation über ein Kommunikationsnetz, wobei das Verfahren umfasst:
Ausführen einer Kommunikations-Client-Anwendung in einem suspendierten Zustand an einer Benutzerstation;
Empfangen eines Kommunikationsereignisses an einer Filterkomponente (S304, S604);
Verwenden von Filterparametern an der Filterkomponente, um zu bestimmen, ob das Kommunikationsereignis ein selektiertes Kommunikationsereignis (S306, S606) ist;
Blockieren des Kommunikationsereignisses an der Filterkomponente, wenn das Kommunikationsereignis kein selektiertes Kommunikationsereignis (S320, S620) ist;
wenn das Kommunikationsereignis ein selektiertes Kommunikationsereignis ist, Alarmieren eines Benutzers der Benutzerstation bezüglich des Kommunikationsereignisses (5310, S610); und **dadurch gekennzeichnet, dass** das Verfahren umfasst:
Ausführen von Ereignis-Benachrichtigungscode in einem aktiven Zustand an der Benutzerstation, wenn sich die Kommunikations-Client-Anwendung in einem suspendierten Zustand befindet, um den Empfang der genannten Alarmierung zu erkennen und eine Benachrichtigung an einen Benutzer der Benutzerstation (S312, S612) anzuzeigen, um den genannten Benutzer des Kommunikationsereignisses zu benachrichtigen, wobei die genannte Benachrichtigung eine Bestätigung vom genannten Benutzer anfordert den Kommunikations-Client (5313, 5613) zu aktivieren; und
Aktivieren der Kommunikations-Client-Anwendung, um das Kommunikationsereignis an der Benutzerstation (S314, S614) als Antwort auf den Empfang einer Benutzereingabe, welche die genannte Bestätigung anzeigt.

2. Verfahren nach Anspruch 1, wobei die Filterparameter der Filterkomponente bereitgestellt werden durch:
deren Konfigurieren an der Benutzerstation und deren Hochladen zur Filterkomponente;
deren Konfigurieren an der Filterkomponente; oder
Ausführen eines Algorithmus an der Filterkomponente um sie zu berechnen, wobei der Algorithmus aktuelle Filterparameter, auf der Grundlage von Benutzerverhalten in Bezug auf vorher empfangene Kommunikationsereignisse, berechnet.

3. Verfahren nach irgendeinem vorangehenden Anspruch, wobei der Schritt zur Verwendung von Filterparametern (S306, S606) selektiv in Abhängigkeit von wenigstens einem des Folgenden aktiviert wird:
Erkennen, dass es sich bei der Benutzerstation um mobiles Gerät handelt;
Erkennen, dass ein Batteriesparmodus der Benutzerstation aktiviert ist;
Erkennen des Standorts der Benutzerstation;
Erkennen des Typs der Benutzerstation; und
Erkennen der Tageszeit.

4. Verfahren nach irgendeinem vorhergehenden Anspruch, wobei die Filterparameter eins oder mehrere von Folgenden einschließen:
das Kommunikationsereignis wird von einem oder mehreren speziellen Benutzern gesendet;
das Kommunikationsereignis ist ein spezieller Typ von Kommunikationsereignis;
das Kommunikationsereignis wird zu einer speziellen Tageszeit gesendet;
das Kommunikationsereignis besitzt einen speziell assoziierten Kontext;
das Kommunikationsereignis enthält ein oder mehrere Schlüsselwörter.

5. Verfahren nach Anspruch 4, wobei das Kommunikationsereignis aus Folgenden selektiert wird:
einem Telefonanruf;
einem Videoanruf;
einem Mehrbenutzer-Telefon- oder Videoanruf;
einer Sofortnachricht;
einer Mehrbenutzer-Sofortnachricht;
einem Dateitransfer;
einer Präsenzbenachrichtigung.

6. Verfahren nach Anspruch 5, wobei ein Telefon- oder Videoanruf ein selektiertes Kommunikationsereignis ist, ungeachtet der anderen Filterparameter, die bestimmen könnten, dass das Kommunikationsereignis blockiert werden sollte.

7. Verfahren nach irgendeinem vorhergehenden Anspruch, wobei die Filterkomponente an einem der Folgenden implementiert wird: (i) an einem Server im Kommunikationsnetz, wobei das Kommunikationsereignis an der Benutzerstation über einen Kanal empfangen wird, der zwischen dem Server und der Benutzerstation hergestellt wurde, wobei der Alarmierungsschritt (S610) das Senden des Kommunikationsereignisses vom Server zur Benutzerstation über das Kommunikationsnetz umfasst, (ii) an einer zweiten Benutzerstation, die eine Instanz einer Kommunikations-Client-Anwendung ausführt die mit einem Benutzer der Benutzerstation assoziiert ist, wobei der Alarmierungsschritt umfasst:
Senden des Kommunikationsereignisses von der zweiten Benutzerstation zu einem Server im Kommunikationsnetz;
Speichern des Kommunikationsereignisses am Server; und
Senden einer Push-Benachrichtigung (S310) vom Server zur Benutzerstation über das Kommunikationsnetz; oder (iii) an der Benutzerstation.

8. Verfahren nach irgendeinem vorhergehenden Anspruch, wobei, wenn sich die Kommunikations-Client-Anwendung in einem suspendierten Zustand befindet, eine grafische mit der Kommunikations-Client-Anwendung assoziierte Schnittstelle nicht auf der Benutzerstation angezeigt wird, und reagierend auf das Aktivieren der Kommunikations-Client-Anwendung, umfasst das Verfahren die Anzeige der mit der Kommunikations-Client-Anwendung assoziierten grafischen Benutzerschnittfläche.

9. Benutzerstation, die eingerichtet ist, nur selektierte Kommunikationsereignisse an einen Benutzer der Benutzerstation zu liefern, wobei die Benutzerstation umfasst:
Eingabemittel (224, 221) zum Empfangen von Kommunikationsereignissen;
Verarbeitungsmittel (202) zum Ausführen einer Kommunikations-Client-Anwendung (108), die einen suspendierten Zustand und einen aktivierten Zustand aufweist, wobei das genannte Verarbeitungsmittel eingerichtet ist, Filtercode auszuführen, der Filterparameter verwendet, um zu bestimmen, ob ein empfangenes Kommunikationsereignis ein selektiertes Kommunikationsereignis ist und das Kommunikationsereignis zu blockieren, wenn das Kommunikationsereignis kein selektiertes Kommunikationsereignis ist; und
Anzeigemittel (204), das eingerichtet ist, einen Benutzer der Benutzerstation auf ein Kommunikationsereignis aufmerksam zu machen, wenn das Kommunikationsereignis ein selektiertes Kommunikationsereignis ist, **dadurch gekennzeichnet, dass**:
das Verarbeitungsmittel eingerichtet ist, den Ereignis-Benachrichtigungscode in einem aktiven Zustand an der Benutzerstation auszuführen, wenn sich die Kommunikations-Client-Anwendung in einem suspendierten Zustand befindet, um den Empfang der genannten Alarmierung zu erkennen und eine Benachrichtigung einem Benutzer der Benutzerstation (S312, S612) anzuzeigen, um den genannten Benutzer des Kommunikationsereignisses zu benachrichtigen, wobei die genannte Benachrichtigung eine Bestätigung vom genannten Benutzer anfordert den Kommunikations-Client (S313, S613) zu aktivieren; und
wobei die Kommunikations-Client-Anwendung den aktivierten Zustand anwendet, um ein selektiertes Kommunikationsereignis, reagierend auf den Empfang einer Benutzereingabe zu empfangen, welche die genannte Bestätigung anzeigt.

10. Verfahren, wie in Anspruch 7 beansprucht, wobei die Filterkomponente an einem der Folgenden implementiert wird: (i) dem Server im Kommunikationsnetz oder (iii) an der Benutzerstation, ferner die Überwachung einer VoIP-Buchse an der Benutzerstation umfassend, um den Empfang des Kommunikationsereignisses zu erkennen.

## Revendications

1. Procédé de livraison d'événements de communication sélectionnés à un terminal utilisateur sur un réseau de communications, le procédé comprenant :
l'exécution d'une application cliente de communication dans un état interrompu au niveau du terminal utilisateur ;
la réception d'un événement de communication au niveau d'un composant de filtrage (S304, S604) ;
l'utilisation de paramètres de filtrage au niveau du composant de filtrage pour déterminer que l'événement de communication est ou non un événement de communication sélectionné (S306, S606) ;
le blocage de l'événement de communication au niveau du composant de filtrage si l'événement de communication n'est pas un événement de communication sélectionné (S320, S620) ;
si l'événement de communication est un événement de communication sélectionné, l'avertissement d'un utilisateur du terminal utilisateur de l'événement de communication (S310, S610) ; et **caractérisé en ce que** le procédé comprend :
l'exécution d'un code de notification d'événement dans un état actif au niveau du terminal utilisateur quand l'application cliente de communication est dans un état interrompu pour détecter la réception dudit avertissement et afficher une notification à l'intention d'un utilisateur du terminal utilisateur (S312, S612) pour notifier ledit utilisateur de l'événement de communication, dans lequel ladite notification demande confirmation par ledit utilisateur de l'activation de le client de communication (S313, S613) ; et
l'activation de l'application cliente de communication pour recevoir l'événement de communication au niveau du terminal utilisateur (S314 ,S614), en réponse à la réception d'un entrée d'utilisateur indiquant ladite confirmation.

2. Procédé selon la revendication 1, dans lequel les paramètres de filtrage sont fournis au composant de filtrage en :
les configurant au niveau du terminal utilisateur et les téléchargeant dans le composant de filtrage ;
les configurant au niveau du composant de filtrage ; ou
exécutant un algorithme au niveau du composant de filtrage pour les calculer, dans lequel l'algorithme calcule les paramètres de filtrage courants en fonction d'un comportement d'utilisateur relativement aux événements de communication reçus antérieurement.

3. Procédé selon l'une quelconque des revendications précédentes, dans lequel l'étape d'utilisation de paramètres de filtrage (S306, S606) est activé sélectivement en fonction d'au moins l'une d'une :
détection que le terminal utilisateur est un dispositif mobile ;
détection qu'un mode d'économie de batterie du terminal utilisateur est activé ;
détection de la position du terminal utilisateur ;
détection du type de terminal utilisateur ; et
détection de l'heure de la journée.

4. Procédé selon l'une quelconque des revendications précédentes, dans lequel les paramètres de filtrage comportent un ou plusieurs de :
l'envoi de l'événement de communication par un ou plusieurs utilisateurs particuliers ;
un type particulier de l'événement de communication ;
l'envoi de l'événement de communication à une heure particulière de la journée ;
un contexte particulier de l'événement de communication ;
un ou plusieurs mots clés contenus dans l'événement de communication.

5. Procédé selon la revendication 4, dans lequel le type d'événement de communication est sélectionné parmi :
un appel vocal ;
un appel vidéo ;
un appel vocal ou vidéo multi-utilisateurs ;
un message instantané ;
un message instantané multi-utilisateurs ;
un transfert de fichier ;
une notification de présence.

6. Procédé selon la revendication 5, dans lequel un appel vocal ou vidéo est un événement de communication sélectionné, quels que soient les autres paramètres de filtrage qui pourraient déterminer que l'événement de communication sélectionné doit être bloqué.

7. Procédé selon l'une quelconque des revendications précédentes, dans lequel le composant de filtrage est mis en oeuvre au niveau de l'un : (i) d'un serveur dans le réseau de communications, l'événement de communication est reçu au niveau du terminal utilisateur sur un canal établi entre le serveur et le terminal utilisateur, dans lequel l'étape d'avertissement (S610) comprend la transmission de l'événement de communication par le serveur au terminal utilisateur sur le réseau de communication, (ii) au niveau d'un second terminal utilisateur exécutant une instance d'une application cliente de communication associée à un utilisateur du terminal utilisateur, l'étape d'avertissement comprenant :
la transmission de l'événement de communication par le second terminal utilisateur à un serveur dans le réseau de communications ;
la mémorisation de l'événement de communication au niveau du serveur ; et
la transmission d'une notification poussée (S310) par le serveur au terminal utilisateur sur le réseau de communication ; ou (iii) au niveau du terminal utilisateur.

8. Procédé selon l'une quelconque des revendications précédentes, dans lequel quand l'application cliente de communication est dans un état interrompu une interface utilisateur graphique associée à l'application cliente de communication n'est pas affichée sur le terminal utilisateur, et en réponse à l'activation de l'application cliente de communication, le procédé comprend l'affichage de l'interface utilisateur graphique associée à l'application cliente de communication.

9. Terminal utilisateur agencé pour délivrer uniquement des événements de communication sélectionnés à un utilisateur du terminal utilisateur, le terminal utilisateur comprenant :
un moyen d'entrée (224, 221) pour recevoir des événements de communication ;
un moyen de traitement (202) pour exécuter une application cliente de communication (108) qui a un état interrompu et un état activé, ledit moyen de traitement étant agencé pour exécuté un code de filtrage qui utilise des paramètres de filtrage pour déterminer qu'un événement de communication reçu est ou non un événement de communication sélectionné et bloquer l'événement de communication si l'événement de communication n'est pas un événement de communication sélectionné ; et
un moyen d'affichage (204) agencé pour avertir un utilisateur du terminal utilisateur d'un événement de communication si l'événement de communication est un événement de communication sélectionné, **caractérisé en ce que** :
le moyen de traitement est agencé pour exécuter un code de notification d'événement dans un état actif au niveau du terminal utilisateur quand l'application cliente de communication est dans un état interrompu pour détecter la réception dudit avertissement et afficher une notification à un utilisateur du terminal utilisateur (S312, S612) pour notifier ledit utilisateur de l'événement de communication, dans lequel ladite notification demande confirmation par ledit utilisateur de l'activation de le client de communication (S313, S613) et
dans lequel l'application cliente de communication prend l'état activé pour recevoir un événement de communication sélectionné en réponse à la réception d'une entrée d'utilisateur indiquant ladite confirmation.

10. Procédé selon la revendication 7, dans lequel le composant de filtrage est mis en oeuvre au niveau de l'un : (i) du serveur dans le réseau de communication, ou (iii) au niveau du terminal utilisateur, comprenant en outre la surveillance d'un socket VoIP au niveau du terminal utilisateur pour détecter la réception de l'événement de communication.
